# EUROPEAN PATENT SPECIFICATION

(11) **EP 2 075 958 B1**
(45) Date of publication and mention of the grant of the patent: **22.04.2015**
(21) Application number: 07800976.8
(22) Date of filing: 16.08.2007
(51) Int. Cl.: H04L 12/24

(54) **METHOD AND NODE DEVICE FOR REALIZING THE NETWORK TOPOLOGY DISCOVERY**
VERFAHREN UND KNOTENEINRICHTUNG ZUM REALISIEREN DER NETZWERKTOPOLOGIE-ENTDECKUNG
PROCÉDÉ ET DISPOSITIF NOEUD DESTINÉS À RÉALISER UNE DÉCOUVERTE DE TOPOLOGIE RÉSEAU

(30) Priority: 28.09.2006 CN 200610152388
(43) Date of publication of application: 01.07.2009
(73) Proprietor: Huawei Technologies Co., Ltd., Longgang District Shenzhen, Guangdong 518129 (CN)
(72) Inventor: LI, Min, Guangdong 518129 (CN); ZHANG, Yang, Guangdong 518129 (CN); SHI, Zhenyu, Guangdong 518129 (CN)
(74) Representative: Körber, Martin Hans
(86) International application number: PCT/CN2007/070500
(87) International publication number: WO 2008/037203

(56) References cited:
- CN-A- 1 558 615
- CN-A- 1 756 189
- CN-A- 1 780 250
- CN-A- 1 801 770
- US-A1- 2003 097 438
- US-A1- 2006 002 311
- ANDY BIERMAN CISCO SYSTEMS; INC KEITH MCCLOGHRIE CISCO SYSTEMS; INC: "Physical Topology Discovery Protocol and MIB; draft-ietf-ptopomib-pdp-03.txt" IETF STANDARD-WORKING-DRAFT, INTERNET ENGINEERING TASK FORCE, IETF, CH, vol. ptopomib, no. 3, 16 November 1998 (1998-11-16), XP015025949 ISSN: 0000-0004

## Description

This application claims priority to Chinese Patent Application No. 200610152388.2, filed with the Chinese Patent Office on September 28, 2006 and entitled "METHOD AND SYSTEM FOR ACQUIRING NETWORK TOPOLOGY INFORMATION".

### Field of the Invention

The present invention relates to the field of Internet technologies and in particular to a method and a node device for making a network topology discovery.

### Background of the Invention

The Operation, Administration and Maintenance (OAM) protocol was initially developed by network operators for the purpose of improving reliability and maintainability of a network. A primary function of the OAM protocol is to detect a defect of the network. A correctable abnormality such as a bit error, a time deviation, and so on, shall be isolated within a certain range so as not to interfere with the operation of the network. Since data is transmitted at a constant rate over the network, any interruption will be recognized immediately as a fault of the loss of a signal.

The Ethernet technology is easy to use, at a low cost and offers constantly increasing bandwidths, and has been used on a large scale as both a service and a network infrastructure in the domains of intranets, metropolitan area networks and wide area networks. The OAM mechanism gains a great success in reducing the cost of network maintenance, and therefore the OAM naturally is extended into the Ethernet based on frames and data packets, which thus gives rise to Ethernet OAM.

Functions of the Ethernet OAM can be divided into two general parts of fault management and performance management. The fault management is to probe connectivity of the network by transmitting as triggered periodically or manually a detection message capable of detecting a fault, and also provides functions of fault confirmation and fault isolation similar to those of a PING message in the Internet Protocol so as to locate an Ethernet fault as well as provide functions of fault notification and alarm restrain. The performance management primarily refers to making measurement of parameters of such as packet loss, latency, dithering during transmission over the network and making statistics of various traffics in the network, such as the number of received and transmitted bytes, the number of packets in error, and so on.

Besides detection of some faults of the network through the OAM, a discovery of a part of network topology information can also be made with the SNMP protocol, and only information on link status and device status of a certain node device itself can be derived from this discovery. The link status of the node device itself refers to the operation status of a port on the device (Up/Down), and the device status refers to information on whether the device is available, and so on. However, it is impossible to detect the status of an end-to-end connection for a user service, and furthermore this method will be inapplicable to the node device which is not SNMP-enabled.

US 2006/002311 A1 describes a network device with integrated topology discovery function adapted to virtual local area networks (VLANs). One network device creates and broadcasts a query packet for topology discovery in each VLAN. At each receiving network device, a query packet received receives the query packet, and a reply packet is produced by a reply packet generator. A reply packet transmitter sends the produced reply packet back to the requesting network device. In one word, D1 is directed to solve the problem that the existing management tools are unable to offer the capability of VLAN topology discovery per se (see paragraph [0008]). In addition, D1 explicitly describes that its object is to provide a network device with integrated topology discovery functions adapted to VLANs (see paragraph [0009]).

US 2003/0097438 A1 describes that a system discovers the topology of devices in a network, such as all of the layer-2 and layer-3 devices, including routers and switches. D2 aims to overcome the limitations of prior art for the purpose of evaluating a network to determine its suitability for target applications.

### Summary of the Invention

The invention provides a method and a node device for making a network topology discovery, which can acquire information on a connection between nodes among network topology information, that is, an end-to-end connection status.

The invention provides a method for making a network topology discovery, which includes: receiving via a first port on a local node from a previous node a network topology query command including address information of a designated node and a query range identifier, the query range identifier including a maintenance domain identifier and/or a maintenance association identifier; and feeding back on the premise that the first port is within the query range in the network topology query command, to the designated node, network topology information of the local node, including information on a connection between the local node and the previous node; wherein, when the query range identifier comprising a maintenance domain identifier, further comprising if the first port is a Domain Service Access Point, DSAP, the first port will not forward it to any other node; when the query range identifier comprising a maintenance association identifier, further comprising if the first port is an Maintenance Association End Point, MEP, the first port will not forward it to any other node.

The invention further provides a node device for making a network topology discovery, which includes: a reception unit adapted to receive via a port on a local node from a previous node a network topology query command including address information of a designated node and a query range identifier, the query range identifier including a maintenance domain identifier and/or a maintenance association identifier; a second determination unit adapted to determine whether the port is within the query range, if the port is within the query range, to notify the topology information feedback unit and a topology information feedback unit adapted to feed back on the premise that the determination result of the second determination unit is that the port is within the query range, to the designated node in the network topology query command, network topology information of the local node, including information on a connection between the local node and the previous node; wherein, when the query range identifier comprising a maintenance domain identifier, the second determination unit further comprising if the port on the local node is a domain service access point of the maintenance domain, forwarding of the query command via the port will be prohibited; when the query range identifier comprising a maintenance association identifier, the second determination unit further comprising if the port on the local node is a maintenance association end point of the maintenance association, forwarding of the query command via the port to the other nodes will be prohibited.

As can be seen from the above, in the invention, upon reception of a network topology query command, including address information of a designated node, from a previous node, a certain node feeds back to the designated node, network topology information of the local node, including information on a connection between the local node and the previous node, so that the designated node can obtain the information on the connection between the nodes, thereby providing an implementation premise for detection of an end-to-end connection of a user service.

### Brief Description of the Drawings

Figure 1 is a schematic diagram of a maintenance domain in the prior art;
Figure 2 is a schematic diagram of a service instance based upon an MA in the prior art;
Figure 3 is a schematic diagram of a service instance throughout a network, which is applicable to an embodiment of the invention;
Figure 4 is a schematic diagram of a service instance based upon an MD, which is applicable to an embodiment of the invention;
Figure 5 is a flow chart of an embodiment of making a topology discovery throughout the network in the invention;
Figure 6 is a flow chart of an embodiment of making a network topology discovery within an MD in the invention;
Figure 7 is a flow chart of an embodiment of making a network topology discovery within an MA in the invention; and
Figure 8 is a schematic structural diagram of an embodiment of a node device for making a network topology discovery in the invention.

### Detailed Description of the Invention

Embodiments of the invention provide a method for making a network topology discovery, and a network topology including information on a connection between nodes can be discovered with this method.

Several concepts related to the embodiments of the invention will firstly be introduced in brief before descriptions thereof.

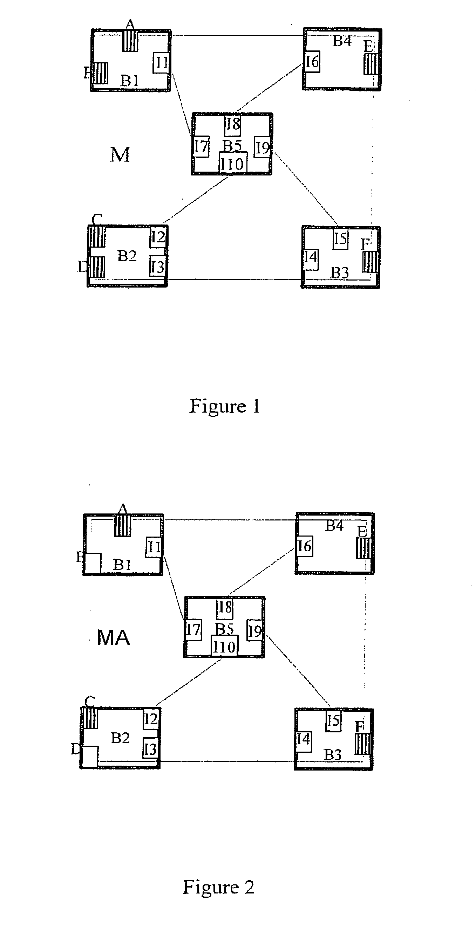

Reference is firstly made to Figure 1 which is a schematic diagram of a maintenance domain in the prior art. It shall be noted that technical solutions in the embodiments of the invention can be applicable in application contexts as illustrated in the maintenance service example.

A Maintenance Domain (MD) refers to a network or a part thereof involved in the fault management functions, and different MDs are distinguished with MD names, for example, the maintenance domain in Figure 1 is named M. Boundaries of the maintenance domain is defined with a series of Domain Service Access Points (DSAP), which provide a connectivity service to the outside of the maintenance domain. An intermediate Service Access Point (ISAP) may also be present within the maintenance domain, and the ISAP is an intermediate point from the DSAP on a node device (e.g., a bridge device) to that on another node device (e.g., a bridge device). The DSAP or ISAP is a port on a node device.

Five bridge devices (each can be regarded as a node in the network), B1, B2, B3, B3 and B5 respectively, are present in the maintenance domain named M in Figure 1. Two DSAPs, A and B, and an ISAP, I1, are present on the B1; two DSAPs, C and D, and two ISAPs, I2 and 13, are present on the B2; a DSAP, F, and two ISAPs, 14 and I5, are present on the B3; a DSAP, E, and an ISAP, 16, are present on the B4; and four ISAPs, I7, I8, I9 and I 10, are present on the B5.

A plurality of service instances can be configured in the maintenance domain as desired, for example, a plurality of DSAPs can be present on a bridge device, while one or more of the DSAPs available can be set for a service of a certain user, and the rest of the DSAPS on the bridge device will not operate for the service. Designation of a service instance actually means designation of a plurality of DSAPs to thereby establish a connectionless association relationship between these DSAPs, which is referred to as a Maintenance Association (MA), and therefore it can be said that a plurality of maintenance associations can be present in a maintenance domain. An end point of a maintenance association is referred to as a Maintenance Association End Point (MEP), and different MEPs are interconnected via a Maintenance Association Intermediate Point (MIP). An MEP in a maintenance association is physically located at a corresponding DSAP, and an MIP is physically located at a corresponding ISAP. The DSAP and ISAP and the MEP and MIP are distinguished in that they are defined based upon different concepts, that is, the DSAP and the ISAP are defined based upon an MD, and the MEP and the MIP are defined based upon an MA. Different MAs are distinguished with unique MA names throughout the maintenance domain, and an MA name and a maintenance domain name form together a unique identifier which shall be carried in a message of a service instance for distinguishing from other service instances.

Reference is made to Figure 2 which is a service instance C1 based upon an MA in the prior art. As compared with Figure 1, only A, C, E and F in the domain M are configured as DSAPs available to the C1, thereby establishing a service instance (that is, the MA) related to the C1, and the other two DSAPs (B and D) are not put into use and therefore do not belong to the service instance.

Embodiments of the invention will be detailed after the concepts of maintenance domain, maintenance instance (that is, MA), DSAP, ISAP, MEP and MIP have become apparent.

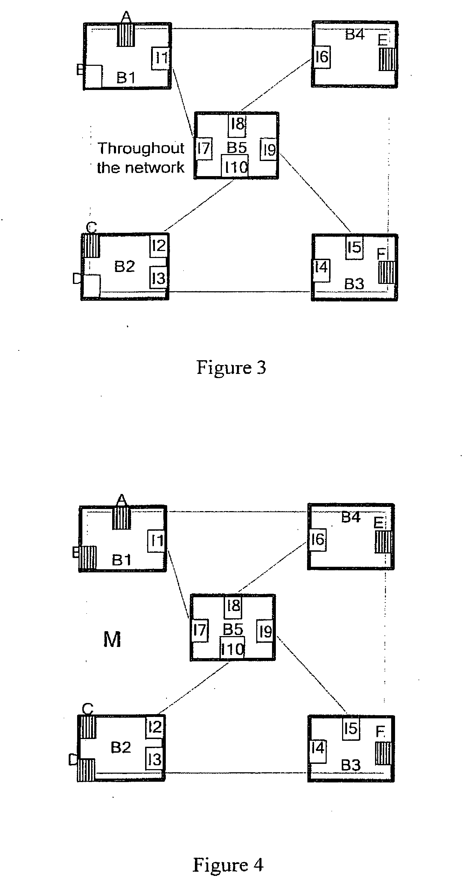

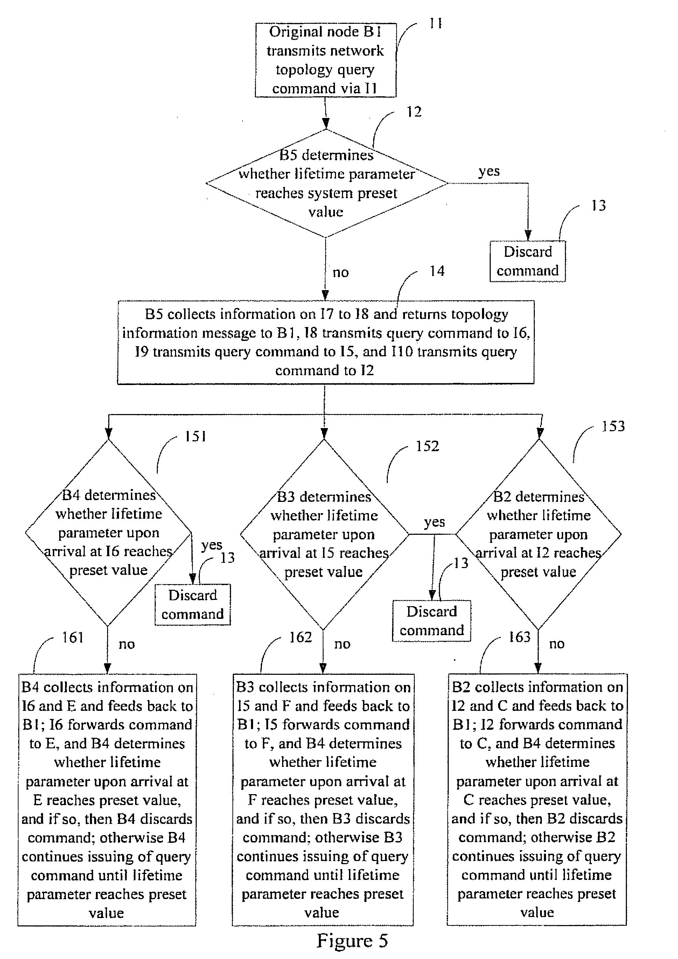

A method for making a topology discovery throughout a network will firstly described with reference to Figure 3 and Figure 5. Figure 3 is a schematic diagram of a service instance throughout the network, which is applied in an embodiment of the invention, and Figure 5 is a flow chart of an embodiment of making a topology discovery throughout the network in the invention.

Five bridge devices, B1, B2, B3, B4 and B5, are present throughout the network illustrated in Figure 3. Three ports, A, B and I1, are present on the B1; three ports, C, D, I2 and 13, are present on the B2; three ports, F, I4 and 15, are present on the B3; two ports, E and 16, are present on the B4; and four ports, 17, I8, 19 and I10, are present on the B5, where the B and the D are unused ports. The bridge device B1 where the port A is located is assumed to be an original node (those skilled in the art can appreciate that each bridge device in the network can be regarded as a node), and such a situation will not occur during forwarding a message that a command may be discarded due to an MD level.

The step 11 to the step 163 illustrated in Figure 5 will be detailed below.

Step 11: The original node B1 transmits (e.g., in a broadcast mode) via the I1 a network Topology Discovery Message (TDM) to other nodes in a connection relationship with the I1. The message is for the purpose of querying about network topology information, and therefore the TDM can also be referred to a network topology query command. An illustrative format of the TDM message is as illustrated in Table 1 below:

**Table 1 TDM message format**

| Octets | Fields | |
|---|---|---|
| 1 | MD Level = 1 | Version = 1.0 |
| 1 | OpCode = 0x10 | |
| 1 | Flags | |
| 1 | First TLV Offset | |
| 4 | Sequence Number = 123456 | |
| 1 | TDM TTL filed = 1 | |
| 6 | Original MAC Address = B1 | |
| 4 | Local Bridge MAC = B1 | |
| 4 | Local Port TLV = I1 | |

Specific meanings of MD Level, Version, OpCode, Flags, First TLV Offset, Sequence Number, TDM TTL field and Original MAC Address in Table 1 will be detailed below.

MD Level denotes the level of the MD domain, and no message lower than the configured MD level will be forwarded via an MIP. For example, the MD level of an MIP is defined as 4, and a TDM will be discarded if MD level = 3 is carried in the message.

Version denotes the version of the message.

Op Code is a parameter value in the message. For example, OpCode = 0x10 indicates that the message is used to execute an automatic discovery function.

Flags is set to zero and reserved for future extension usage. This field will not be checked at other nodes receiving the TDM message.

First TLV (Type Length Value) Offset denotes an offset of the first TLV.

Sequence Number denotes a sequence number of the message, and whether the message has been retransmitted can be found with the sequence number. For example, it can be found whether the original node or a downstream node has retransmitted a network topology query command carrying the TDM, and if so, then the repeated query command will be discarded.

TDM TTL (TDM Time to Live) field defines a lifetime of the query command (that is, the TDM message) and represents the lifetime upon arrival of the query command at the local node (also referred to as the number of hops). The value is incremented by one each time the query command is issued to a node, and the command will be discarded when the value reaches 256 or another value which is set by the system.

Original MAC (Media Access Control) Address records the address of the original node, e.g., the B1 of the original node illustrated in Table 1. It is with this address that other nodes can respond to the original node with the queried information.

Local Bridge MAC records information on the address where the local node is located. Since the original node B transmits the query command in this step, the Local Bridge MAC carried therein is the MAC address of the B1.

Local Port TLV (Type Length Value) records port information of the local node, and in this step, the original node B1 transmits via the port 11 the query command in which the port information recorded in the Local Port TLV is the I1.

Step 12: The port 17 on the bridge device B5 receives the query command. The B5 firstly detects whether the number of hops in the TDM TTL field reaches the system preset value (e.g., 256), and if so, then the flow goes to the step 13; otherwise, the flow goes to the step 14. Those skilled in the art can appreciate from another point of view that if the lifetime upon arrival of the query command at the local node (B5) is within the preset range (e.g., of 1 to 255), then the flow goes to the step 14; otherwise, the flow goes to the step 13.

Step 13: The query command including the TDM message is discarded.

Step 14: The B5 collects information on the ports (e.g., I7, I8, I9 and I10) on the local bridge and responds using the information of Original MAC address = B1 in the TDM message to the original node B1 with a network Topology Information Message (TIM) in which the network topology information of the local node is carried.

After the information on the ports on the bridge B5 is aggregated, the information is fed back in the TIM message to the B1, and the information on a bridge can be fed back only once.

Specific contents of the TIM message are illustrated in Table 2 below:

**Table 2 Topology information message format**

| Octets | Fields | |
|---|---|---|
| 1 | MD Level = 1 | Version = 1.0 |
| 1 | OpCode = 0x10 | |
| 1 | Flags | |
| 1 | First TLV Offset | |
| 4 | Sequence Number = 123456 | |
| 1 | TDM TTL filed = 1 | |
| 6 | Original MAC Address Field = B1 | |
| 6 | Local Bridge MAC = B5 | |
| 4 | Previous Port 1 TLV = I1 | |
| 4 | Local Port 1 TLV = 17 | |
| 4 | Local Port 2 TLV = 18 | |
| 4 | Local Port 3 TLV = I9 | |
| 4 | Local Port 4 TLV = I10 | |

The previous Port TLV and the Local Port TLV in the TIM message denote information on a connection between network elements (also referred to as nodes), and each network element announces in the Local Port TLV a port on its own device and announces in the Previous Port TLV a previous port connected therewith (that is, a port of a previous node connected with the local port). As can be seen from this, the network topology information of the local node, which is fed back from the B5 to the original node, includes the information on the connection between the local node and the previous node. It shall be noted that "previous" in the "previous node" as mentioned in various embodiments of the invention is only defined with respect to a network topology query command without any relationship with a practical location between nodes. For example, when the node A receives a network topology query command from the node B, then the node B can be regarded as a previous node of the A without defining practical locations of the node A and the node B in the network.

The B5 not only feeds back the network topology information of the local node to the B1 but also continues the transmission of the query command including the TDM to the other nodes. Specifically:

The B5 transmits the query command to the I6 of the B4 via the port 18 and changes in the TDM message of the query command the content of the Local Bridge MAC to the B5 and the content of the Local Port TLV to the 18;

The B5 transmits the query command to the 15 of the B3 via the port 19 and changes in the TDM message of the query command the content of the Local Bridge MAC to the B5 and the content of the Local Port to the 19;

The B5 transmits the query command to the I2 of the B2 via the port I10 and changes in the TDM message of the query command the content of the Local Bridge MAC to the B5 and the content of the Local Port to the I10.

Step 151: The B4 receives the query command from the 18 via the port 16 thereon, and the B4 firstly determines whether the number of hops in the TDM TTL field reaches the preset value, and if so, then the flow goes to the step 13; otherwise, the flow goes to the step 161.

Step 152: The B3 receives the query command from the 19 via the port I5 thereon, and the B3 firstly determines whether the number of hops in the TDM TTL field reaches the preset value, and if so, then the flow goes to the step 13: otherwise, the flow goes to the step 162.

Step 153: The B2 receives the query command from the I10 via the port I2 thereon, and the B2 firstly determines whether the number of hops in the TDM TTL field reaches the preset value, and if so, then the flow goes to the step 13; otherwise, the flow goes to the step 163.

Step 161: The B4 collects information on the ports (e.g., I6 and E) on the local bridge and feeds back to the original node B1 a TIM message using the information of Original MAC Address Field = B1 in the TDM message, wherein in the TIM message, Local Bridge MAC = B4, Previous Port 1 TLV = 18, Local Port 1 TLV = I6 and Local Port 2 TLV = E.

Furthermore, the 16 forwards the received query command to the E. The B4 determines whether the number of hops in the TDM TTL field upon arrival at the E reaches the preset value, and if so, then the flow goes to the step 13; otherwise, the flow continues forwarding the TDM message to the other nodes until the number of hops in the TDM TTL field at a node receiving the TDM message reaches the system preset value, where the message will not be forwarded. It shall be noted that the lifetime of the query command will not be changed while the query command is forwarded between ports within the same node; therefore, the B4 determines whether the number of hops in the TDM TTL field upon arrival at the E reaches the preset value, that is, whether the number of hops in the TDM TTL field upon arrival at the local node reaches the preset value.

Step 162: The B3 collects information on the ports (e.g., 15 and F) on the local bridge and feeds back to the original node B1 a TIM message using the information of Original MAC Address Field = B1 in the TDM message, wherein in the TIM message, Local Bridge MAC = B3, Previous Port 1 TLV = I9, Local Port 1 TLV = 15 and Local Port 2 TLV = F.

Furthermore, the 15 forwards the received query command to the F. The B3 determines whether the number of hops in the TDM TTL field upon arrival at the F reaches the preset value, and if so, then the flow goes to the step 13; otherwise, the flow continues forwarding the TDM message to the other nodes via the port F until the number of hops in the TDM TTL field at a node receiving the TDM message reaches the system preset value, where the message will not be forwarded.

Step 163: The B2 collects information on the ports (e.g., I2 and C) on the local bridge and feeds back to the original node B1 a TIM message using the information of Original MAC Address Field = B1 in the TDM message, wherein Local Bridge MAC = B2, Previous Port 1 TLV = I10, Local Port 1 TLV = 12 and Local Port 2 TLV = C.

Furthermore, the I2 forwards the received query command to the C. The B2 determines whether the number of hops in the TDM TTL field upon arrival at the C reaches the preset value, and if so, then the flow goes to the step 13; otherwise, the flow continues forwarding the TDM message to the other nodes via the port C until the number of hops in the TDM TTL field at a node receiving the TDM message reaches the system preset value, where the message will not be forwarded.

Those skilled in the art can appreciate that a downstream node in subsequent reception of the network topology query command including the address information of the original node B1 still processes as in the forgoing solutions of the B2, B3 and B4. Furthermore, a plurality of downstream nodes receiving the query command will feed back in the TDM messages their respective network topology information to the original node, and the network topology information fed back from each node to the original node will further include the information on the connection between the local node and the previous node, so that the original node can aggregate data of the received network topology information of the respective nodes to constitute a database, and form a network topology and, if desired, possibly a specific network topology graph by calculating the data information.

The embodiments of the invention further provide a first embodiment of a node device for making a network topology discovery. The node device in the present embodiment includes a transmission unit, a reception unit and a statistics-making unit and optionally a determination unit, each of which will be detailed below.

The transmission unit is adapted to transmit a network topology query command including an instruction lifetime parameter and to feed back network topology information of a bridge where a local node is located, of which the statistics-making unit makes statistics, to a bridge where an original node is located. Those skilled in the art can appreciate that the instruction lifetime parameter is a specific form of lifetime information.

The reception unit is adapted to receive the network topology query command including the instruction lifetime parameter, and the query command contains address information of the original node.

The statistics-making unit is adapted to make statistics of the network topology information of the bridge where the local node is located, including information on a connection between the local node and a previous node, after the reception unit receives the network topology query command, and to notify the transmission unit to feed back the information to the bridge where the original node is located after collecting the statistics.

Optionally, in order to prevent the network topology query command from being forwarded unlimitedly within the network and to prevent respective nodes from feeding back repeatedly respective network topology information to the original node, the lifetime information can be set in the network topology query command, and correspondingly the determination unit can be set in the node device. The determination unit is adapted to determine whether the lifetime upon arrival of the network topology query command at the local node is within a preset range, and if so, then the determination unit is adapted to notify the statistics-making unit to make statistics of the network topology information of the bridge where the local node is located and to continue transmission of the network topology query command to other nodes through the transmission unit.

It shall be noted that although the node device in the present embodiment is a bridge device, those skilled in the art shall appreciate that the node device can alternatively be a network device other than the bridge device, and the network topology information of the local node (the network topology information of the bridge where the local node is located in the present embodiment) fed back from each node device includes the information on the connection between the local node and the previous node. Furthermore, the original node can acquire a network topology from the received network topology information of the respective nodes.

In the above method and node device embodiments, a query about the topology information is made each time throughout the network, which may result in a large number of multicast messages occurring over the network, and if no network topology information throughout the network is required, then a query about the network topology information of a plurality of nodes can be made within a smaller query range to thereby acquire a network topology structure within a certain range.

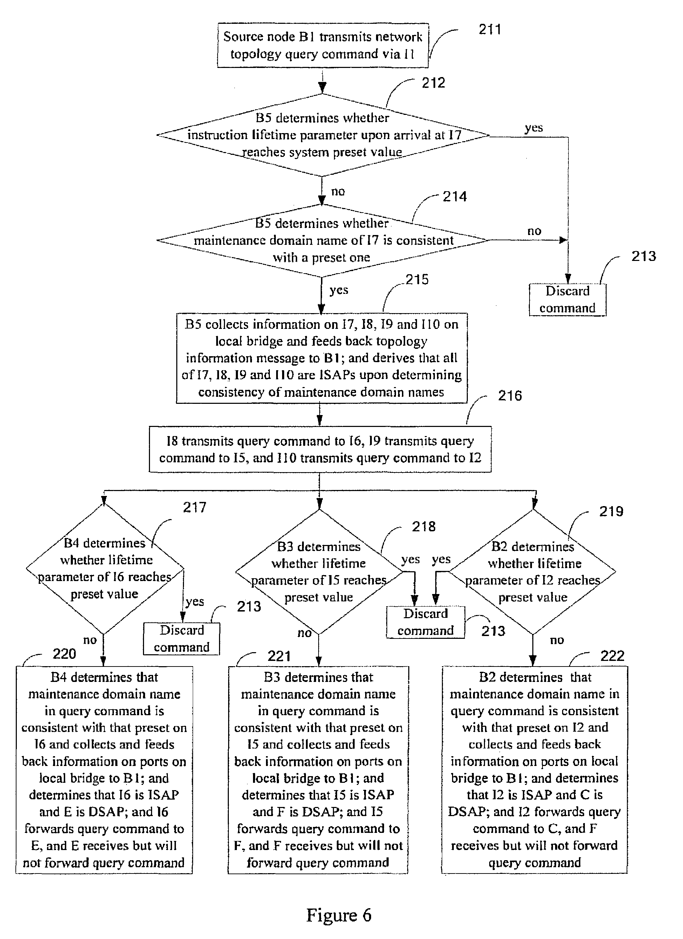

For example, an item of MD (Maintenance Domain) Name TLV information is added in the TDM message to identify the network topology information of a designated MD to be probed. As can be appreciated, the maintenance domain name is a specific mode of identifying a maintenance domain, and other modes in addition to this are possible, for example, a maintenance domain can be identified uniquely with use of a maintenance domain code. With addition of this item, a downstream node of the original node will check the information and determine hereby whether the local port is a DSAP point, and if so, then a boundary of the MD has been reached and therefore a TDM message (that is, the network topology query command) will not be forwarded any longer; otherwise, forwarding of the TDM message will be continued. A method for making a network topology discovery within a local range will be detailed below with reference to Figure 4 and Figure 6.

Reference is made to Figure 4 which is a schematic diagram of a service instance based upon an MD, which is applicable to an embodiment of the invention. The MD in Figure 4 involves five bridge devices, B1, B2, B3, B4 and B5, where two DSAPs, A and B, and an ISAP, I1, are present on the B1; two DSAPs, C and D, and two ISAPs, 12 and 13, are present on the B2; a DSAP, F, and two ISAPs, 14 and 15, are present on the B3; a DSAP, E, and an ISAP, 16, are present on the B4; and four ISAPs, 17, I8, 19 and I10, are present on the B5. Among these ports, the B and the D are unused DSAPs. The bridge device B1 where the DSAP A port is located is assumed to be an original node, and such a situation will not occur during forwarding a message that a query command may be discarded due to an MD level.

Reference is made to Figure 6 which illustrates a flow chart of querying about network topology information within an MD in an embodiment of the invention.

Step 211: The B1 collects information on the ports (e.g., A and I1) on the local bridge and transmits (e.g., in a multicast mode) via the I1 to other DSAP and ISAP connected with the I1 a TDM message (that is, a network topology query command) with MD Name TLV = M as illustrated in Table 3 below:

**Table 3 TDM message with MD Name TLV**

| Octets | Fields | |
|---|---|---|
| 1 | MD Level = 1 | Version = 1.0 |
| 1 | OpCode = 0x10 | |
| 1 | Flags | |
| 1 | First TLV Offset | |
| 4 | Sequence Number = 123456 | |
| 1 | TDM TTL filed = 1 | |
| 6 | Original MAC Address = B1 | |
| 4 | MD NAME TLV = M | |
| 4 | Local Bridge MAC = B1 | |
| 4 | Local Port TLV = I1 | |

Step 212: The B5 receives the query command via the port 17 thereon, and determines whether the number of hops in the TDM TTL field upon arrival at 17 reaches a system preset value, and if so, then the flow goes to the step 213; otherwise, the flow goes to the step 214.

Step 213: The query command is discarded.

Step 214: The B5 checks whether the MD Name TLV = M in the query command is consistent with an MD Name TLV which is preset at the port 17, and if not, then the flow executes 213; otherwise, the flow goes to the step 215.

Step 215: The B5 collects information on the ports (e.g., 17, I8, 19 and I10) on the local bridge and knows from the information of Original MAC Address = B1 in the received query command that the query command designates a feedback destination address as the original node B1, and then the B5 feeds back a TIM with contents illustrated in Table 4 to the original node B1.

**Table 4 TIM message format including MD Name TLV information**

| Octets | Fields | |
|---|---|---|
| 1 | MD Level = 1 | Version = 1.0 |
| 1 | OpCode = 0x10 | |
| 1 | Flags | |
| 1 | First TLV Offset | |
| 4 | Sequence Number = 123456 | |
| 1 | TDM TTL filed = 256 | |
| 6 | Original MAC Address Field = B1 | |
| 6 | Local Bridge MAC = B5 | |
| 4 | MD NAME TLV = M | |
| 4 | Previous DSAP1 TLV = I1 | |
| 4 | Local Port 1 TLV = I7 | |
| 4 | Local Port 2 TLV = I8 | |
| 4 | Local Port 3 TLV = I9 | |
| 4 ~ | Local Port 4 TLV = I10 | |

In addition to the contents in the above table, the TIM can further include other information as desired, e.g., information indicating the number of local ports, Port Number = 4. This will also apply to a TIM message in other embodiments.

Furthermore upon determining consistency of the MD Name TLVs, it is derived from the configuration information of the respective ports, which is preset on the local node, that all of the I7, I8, 19 and I10 are ISAPs of the MD, and then the flow goes to the step 216.

Step 216: The B5 transmits the query command via the port 18 thereon to the port I6 of the B4 and changes in the message the Local Bridge MAC to the B5 and the Local Port TLV to the 18; transmits the query command via the port 19 to the port I5 of the B3 and changes in the message the Local Bridge MAC to the B5 and the Local Port TLV to the 19; and transmits the query command via the port I10 to the port 13 of the B2 and changes in the TDM message the Local Bridge MAC to the B5 and the Local Port TLV to the I10.

Step 217: The B4 receives via the 16 thereon the query command from the 18 and determines whether the number of hops in the TDM TTL field upon arrival at the 16 (also at the B4) reaches the system preset value, and if so, then the flow goes to the step 213; otherwise, the flow goes to the step 220.

Step 218: The B3 receives via the 15 thereon the query command from the 19 and determines whether the number of hops in the TDM TTL field upon arrival at the I5 (also at the B3) reaches the system preset value, and if so, then the flow goes to the step 213; otherwise, the flow goes to the step 221.

Step 219: The B2 receives via the 12 thereon the query command from the I10 and determines whether the number of hops in the TDM TTL field upon arrival at the I2 reaches the system preset value, and if so, then the flow goes to the step 213; otherwise, the flow goes to the step 222.

Step 220: The B4 determines that the MD Name = M in the query command is consistent with the MD Name preset at the 16, which indicates that the 16 belongs to the MD range, and then the B4 collects information on the ports (e.g., I6 and E) on the local bridge. The B4 acquires the address of the original node B1 from the information of Original MAC Address = B1 in the received query command and further feeds back in an TIM to the B1 the network topology information of the local node including at least information on a connection between the local node and a previous node. Specifically, there are Local Bridge MAC = B4, Previous Port 1 TLV = 18, Local Port 1 TLV = 16 and Local Port 2 TLV = E in the TIM message fed back from the B4 to the B1. Furthermore upon determining consistency of the MD Names, it can be derived from the configuration information of the respective ports, which is preset on the local node, that the 16 is an ISAP of the MD and the E is a DSAP of the MD. The 16 forwards the received query command to the E, and the E receives the query command but will not forward it to any other node. As can be appreciated, since the E is a DSAP of the MD (which indicates that the E is a boundary point of the MD), the 16 may not forward the query command to the E. This will also apply to the other nodes.

Step 221: The B3 determines that the MD Name = M in the query command is consistent with the MD Name preset at the 15, which indicates that the I5 belongs to the MD range, and then the B3 collects information on the ports (e.g., 15 and F) on the local bridge. The B3 acquires the address of the original node B1 from the information of Original MAC Address = B1 in the received query command and further feeds back in an TIM to the B1 the network topology information of the local node including at least information on a connection between the local node and a previous node. Specifically, there are Local Bridge MAC = B3, Previous Port 1 TLV = 19, Local Port 1 TLV = 15 and Local Port 2 TLV = F in the TIM message fed back from the B3 to the B1. Furthermore upon determining consistency of the MD Names, it is derived from the configuration information of the respective ports, which is preset on the local node, that the 15 is an ISAP of the MD and the F is a DSAP of the MD. The 15 forwards the query command to the F, and the F receives the query command but will not forward it to any other node.

Step 222: The B2 determines that the MD Name = M in the query command is consistent with the MD Name preset at the 12, which indicates that the I2 belongs to the MD range, and then the B2 collects information on the ports (e.g., I2 and C) on the local bridge. The B2 acquires the address of the original node B1 from the information of Original MAC Address = B1 in the received query command and further feeds back in an TIM to the B1 the network topology information of the local node including at least information on a connection between the local node and a previous node. Specifically, there are Local Bridge MAC = B2, Previous Port 1 TLV = I10, Local Port 1 TLV = I2 and Local Port 2 TLV = C in the TIM message fed back from the B2 to the B1. Furthermore upon determining consistency of the MD Names, it is derived from the configuration information of the respective ports, which is preset on the local node, that the 12 is an ISAP of the MD and the C is a DSAP of the MD. The I2 forwards the query command to the C, and the C receives the query command but will not forward it to any other node.

In correspondence with the method embodiment illustrated in Figure 6, the invention further provides a second embodiment of a node device for making a network topology discovery. The node device in the present embodiment includes a transmission unit, a reception unit and a statistics-making unit and optionally a determination unit. The node device in the present embodiment will still be described taking a bridge device as an example, but those skilled in the art shall appreciate that the node device will not limit to the bridge device.

The transmission unit is adapted to transmit a network topology query command including an instruction lifetime parameter and a maintenance domain identifier (e.g., a maintenance domain name) and to feed back network topology information of a bridge where a local node is located, of which the statistics-making unit makes statistics, to a bridge of an original node is located.

The reception unit is adapted to receive the network topology query command including the instruction lifetime parameter and the maintenance domain identifier.

The determination unit is adapted to determine whether the lifetime upon arrival of the network topology equerry command at the local node is within a preset range of values, and if so, then the determination unit is adapted to check whether a preset maintenance domain identifier is consistent with the received maintenance domain identifier and to discard the query command if they are inconsistent.

If they are consistent, then the determination unit is adapted to instruct the statistics-making unit to make statistics of the network topology information of the local node and to determine from the received maintenance domain identifier whether a certain port on the local node is a domain service access point of the maintenance domain, and if not, then forwarding of the query command will be continued via the port; otherwise, forwarding of the query command via the port will be prohibited.

The statistics-making unit is adapted to make statistics of the network topology information of the bridge where the local node is located, including information on a connection between the local node and a previous node, upon reception of the command from the determination unit, and to instruct the transmission unit to feed back the information to the bridge where the original node is located after collecting the statistics.

As can be seen from the flow illustrated in Figure 6 and the above corresponding node device, the query range is defined within a local range (instead of a query throughout the network) because the identifier of the maintenance domain to be queried about is added in the TDM message (that is, the network topology query command). If a port receiving the query command does not belong to the MD range to be queried about, then the port will not feed back any network topology information of the local node to the original node; and the node receiving the TDM message will not continue transmitting via a DSAP port thereon, which belongs to the MD, the TDM message to other nodes, so that the TDM message will not be forwarded throughout the network. In order to further reduce the query range and thus satisfy diversified demands, MA (Maintenance Association) Name TLV information can be further added in the TDM and TIM messages to define a network topology information query at an MA level within the MD domain, thereby further reducing occupancy of network bandwidths. Of course, if a maintenance association name is unique throughout the network (it is unnecessary to identify a certain query range by both the maintenance domain name and the maintenance association name), then such a situation will not be excluded that only the maintenance association name is carried in the TDM message without any maintenance domain name.

Descriptions will be given taking the service instance based upon the MA illustrated in Figure 2 as an application context. The MA involves five bridge devices, B1, B2, B3, B4 and B5, where two MEPs, A and B, and an MIP, I1, are present on the B1; two MEPs, C and D, and two MIPs, I2 and 13, are present on the B2; an MEP, F, and two MIPs, I4 and I5, are present on the B3; an MEP, E, and an MIP, 16, are present on the B4; and four MIPs, I7, I8, I9 and I10, are present on the B5. The B and the D are unused MEPs. The B1 where the MEP A port is located is assumed to be an original node, and such a situation will not occur during forwarding a message that a query command may be discarded due to an MD level.

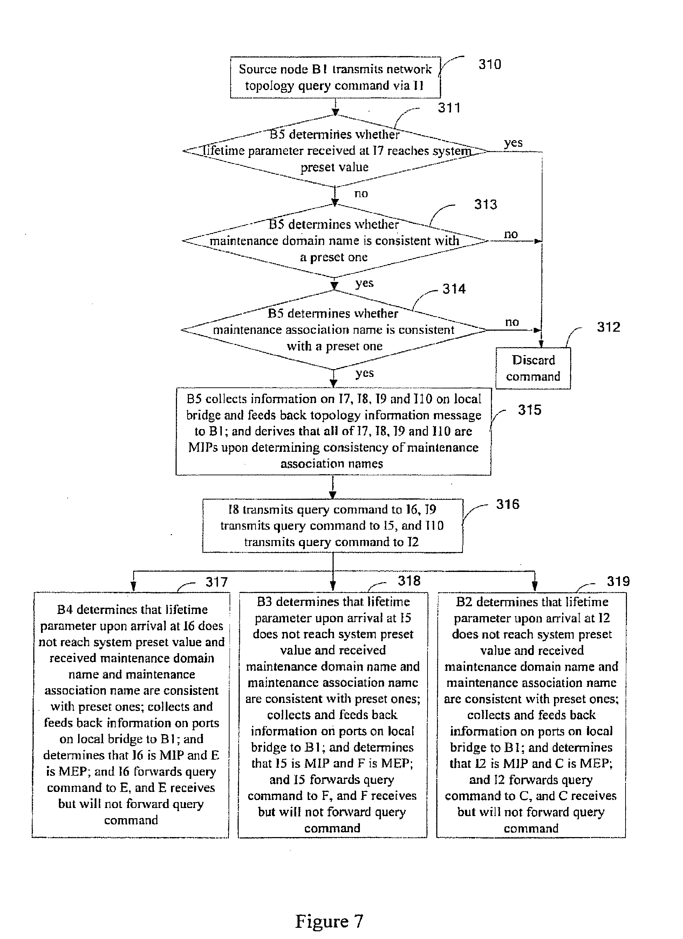

Reference is made to Figure 7 which illustrates a flow chart of querying about network topology information within an MA in an embodiment of the invention.

Step 310: The B1 collects information on the ports (e.g., A and I1) on the local bridge and transmits (e.g., in a multicast mode) via the I1 to other MEP and MIP connected with the I1 a network topology discovery message TDM (also referred to as a network topology query command) as illustrated in Table 5 below:

**Table 5 TDM message with MA Name TLV**

| Octets | Fields | |
|---|---|---|
| 1 | MD Level = 1 | Version = 1.0 |
| 1 | OpCode = 0x10 | |
| 1 | Flags | |
| 1 | First TLV Offset | |
| 4 | Sequence Number = 123456 | |
| 1 | TDM TTL filed = 1 | |
| 6 | Original MAC Address = B1 | |
| 4 | MD NAME TLV = M | |
| 4 | MA NAME TLV = A | |
| 4 | Local Bridge MAC = B1 | |
| 4 | Local Port TLV = I1 | |

Step 311: The B5 receives the query command via the port 17, and determines whether the number of hops in the TDM TTL field upon arrival at 17 (that is, at the local node) reaches a system preset value, and if so, then the flow goes to the step 312; otherwise, the flow goes to the step 313.

Step 312: The query command is discarded.

Step 313: The B5 checks whether the MD Name = M in the message is consistent with an MD Name which is preset at the 17, that is, whether both of them are the M, and if so, which indicates that the 17 belongs to the MD range, then the flow executes step 314; otherwise, the flow goes to the step 312.

Step 314: The B5 further checks whether the MA Name = A in the message is consistent with an MA Name which is preset at the 17, that is, whether both of them are the A, and if so, which indicates that the 17 belongs to the MA range, then the flow executes step 315; otherwise, the flow goes to the step 312.

Step 315: The B5 collects information on the ports (e.g., 17, 18, 19 and 110) on the local bridge and feeds back an TIM illustrated in Table 6 to the bridge B1 where the original node is located (where the address of the B1 is acquired from information of the Original MAC Address = B1 in the query command); and upon determining consistency of the MA Name TLVs, the B5 knows from the configuration information of the respective ports, which is preset on the local node, that all of the 17, I8, 19 and I10 are MEP points, and then the flow goes to the step 316.

**Table 6 Topology information message format including MA Name TLV information**

| Octets | Fields | |
|---|---|---|
| 1 | MD Level = 1 | Version = 1.0 |
| 1 | OpCode = 0x10 | |
| 1 | Flags | |
| 1 | First TLV Offset | |
| 4 | Sequence Number = 123456 | |
| 1 | TDM TTL filed = 1 | |
| 6 | Original MAC Address Field = B1 | |
| 6 | Local Bridge MAC = B5 | |
| 4 | MD NAME TLV = M | |
| 4 | MA NAME TLV = A | |
| 4 | Previous DSAP1 TLV = I1 | |
| 4 | Local PORT 1 TLV = I7 | |
| 4 | Local PORT 2 TLV = I8 | |
| 4 | Local PORT 3 TLV = I9 | |
| 4 | Local PORT 4 TLV = I10 | |

Step 316: The B5 transmits the query command to the port I6 via the port I8 and changes in the message the Local Bridge MAC to the B5 and the Local Port TLV to the 18, and then the flow goes to the step 317;

The B5 transmits the query command to the port 15 via the port 19 and changes in the message the Local Bridge MAC to the B5 and the Local Port TLV to the 19, and then the flow goes to the step 318;

The B5 transmits the query command to the port 13 via the port I10 and changes in the message the Local Bridge MAC to the B5 and the Local Port TLV to the I10 and then the flow goes to the step 319.

Step 317: The B4 receives the query command from the I8 via the port I6 and determines that the number of hops in the TDM TTL field upon arrival of the query command at the 16 and the E (that is, at the local node) does not reach the system preset value and the received MD Name = M and MA Name = A are consistent with those preset on the local node. Furthermore, the B4 collects information on the ports (e.g., I6 and E) on the local bridge and feeds back the information to the B1 (where the address of the B1 is acquired from the information of Original MAC address = B1 in the query command). The B4 changes a TIM message fed back to the B1 to Local Bridge MAC = B4, Previous Port I TLV = 18, Local Port 1 TLV = I6 and Local Port2 TLV = E. Upon determining consistency of the MA Names, the B4 determines from the configuration information on the respective ports, which is preset on the local node, that the 16 is an MIP of the MA and the E is an MEP of the MA. Furthermore, the 16 forwards the query command to the E, and the E receives the query command but will not forward it to any other node.

Step 318: The B3 receives the query command from the 19 via the port 15 and determines that the number of hops in the TDM TTL field upon arrival of the query command at the 15 and the F (that is, at the local node) does not reach the system preset value and the received MD Name = M and MA Name = A are consistent with those preset on the local node. Thus, the B3 collects information on the ports (e.g., 15 and F) on the local bridge, acquires the address of the B1 from the Original MAC address = B1, and further feeds back in a TIM message to the B1 the network topology information of the local node, including information on a connection between the local node and a previous node. Specifically, there are Local Bridge MAC = B3, Previous Port 1 TLV = 19, Local Port 1 TLV = 15 and Local Port 2 TLV = F in the TIM message fed back from the B3 to the B1. Upon determining consistency of the MA Names, the B3 determines from the configuration information on the respective ports, which is preset on the local node, that the 15 is an MIP of the MA and the F is an MEP of the MA, and furthermore the 15 forwards the query command to the F, and the F receives the query command but will not forward it to any other node.

Step 319: The B2 receives the query command from the I10 via the port 12 and determines that the number of hops in the TDM TTL field upon arrival at the 12 and the C (that is, at the local node) does not reach the system preset value and the received MD Name = M and MA Name = A are consistent with those preset on the local node. Thus, the B2 collects information on the ports (e.g., I2 and C) on the local bridge, acquires the address of the B1 from the Original MAC address = B1, and further feeds back in a TIM message to the B1 the network topology information of the local node, including information on a connection between the local node and a previous node. Specifically, there are Local Bridge MAC = B2, Previous Port 1 TLV = I10, Local Port 1 TLV = 12 and Local Port 2 TLV = C in the TIM message fed back from the B2 to the B1. Upon determining consistency of the MA Names, the B2 determines from the configuration information on the respective ports, which is preset on the local node, that the 12 is an MIP of the MA and the C is an MEP of the MA, and furthermore the 12 forwards the query command to the C, and the E receives the query command but will not forward it to any other node.

In correspondence with the method embodiment illustrated in Figure 7, the invention further provides a third embodiment of a node device for making a network topology discovery. The node device in the present embodiment includes a transmission unit, a reception unit and a statistics-making unit and optionally a determination unit. The node device in the present embodiment will still be described taking a bridge device as an example, but those skilled in the art shall appreciate that the node device will not limit to the bridge device.

The transmission unit is adapted to transmit a network topology query command including an instruction lifetime parameter, a maintenance domain identifier (e.g., a maintenance domain name) and a maintenance association identifier (e.g., a maintenance domain name) and to feed back network topology information of a bridge where a local node is located, of which the statistics-making unit makes statistics, to a bridge where an original node is located.

The reception unit is adapted to receive the network topology query command including the instruction lifetime parameter, the maintenance domain identifier and the maintenance association identifier.

The determination unit is adapted to determine whether the lifetime upon arrival of the network topology equerry command at the local node is within a preset range, and if not, then the command is discarded; otherwise, the determination unit is adapted to check whether a preset maintenance domain identifier is consistent with the received maintenance domain identifier.

If the maintenance domain identifiers are inconsistent, then the query command is discarded; otherwise, the determination unit is adapted to continue determining whether the received maintenance association identifier is consistent with that preset.

If the maintenance association identifiers are inconsistent, then the command is discarded; otherwise, the determination unit is adapted to instruct the statistics-making unit to make statistics of the network topology information of the bridge where the local node is located; and upon determining consistency of the maintenance association identifiers, the determination unit is adapted to further determine whether a certain port on the local node is a maintenance association end point of the maintenance association, and if not, then forwarding of the query command via the port to the other nodes will be continued; otherwise, forwarding of the query command via the port to the other nodes will be prohibited.

The statistics-making unit is adapted to make statistics of the network topology information of the bridge where the local node is located upon reception of the command from the determination unit, and to instruct the transmission unit to feed back the information to the bridge where the original node is located after collecting the statistics.

Several embodiments of the invention have been introduced above, and supplementary descriptions of several points of the above embodiments will be given below.

Firstly, the network topology query command in the above embodiments includes the address information of the original node, which refers to a node initiating the network topology query command, and furthermore the other nodes receiving the network topology query command each will feed back the address information of the local node to the original node. Those skilled in the art shall appreciate hereby that each node will make a feedback to address information of a designated node indicated in the received network topology query command, and the address information of the designated node can either the address information of the original node initiating the network topology query command (as described in the above embodiments) or address information of any other node in need of acquisition of the network topology information. Generally, the respective nodes receiving the network topology query command will feed back the network topology information of the local node (including information on a connection between the local node and a previous node) to a designated node indicated in the network topology command, so that the designated node can obtain the network topology information of the respective nodes and also further aggregate the information to form a network topology.

Secondly, a certain node (e.g., the original node) can transmit the network topology query command to the other nodes in different transmission modes. If a broadcast or multicast mode is adopted, then it is possible that a plurality of nodes each will receive the network topology query command from the same previous node (e.g., the original node) and further feed back the network topology information of the local node (including information on a connection between the local node and the previous node) to a designated node indicated in the network topology command, so that the designated node can receive the network topology information of the plurality of nodes and further form a network topology.

Thirdly, as can be seen from the above embodiments, a topology information query can be made for a designated maintenance domain or maintenance association when the network topology query command includes a maintenance domain identifier and/or a maintenance association identifier to thereby avoid a topology discovery throughout the network for each time and hence a large number of multicast messages occurring over the network, thus improving a utilization ratio of bandwidths. Those skilled in the art shall appreciate hereby that the maintenance domain identifier and/or the maintenance association identifier can be understood as a query range identifier, and inclusion of the query range identifier in the network topology query command will be sufficient to attain the purpose of reducing the network topology information query range. Specifically, after a certain node receives via a port thereon the network topology query command including the query range identifier, if the port does not belong to the query range, then the node will not feed back any network topology information of the local node to a designated node. Furthermore after a node receives the network topology query command including the query range identifier, when the query command is required to be forwarded to other nodes, it will be forwarded to the other nodes via a port which is an intermediate point within the query range instead of a port which is a boundary point within the query range, because it will be unnecessary to continue forwarding the query command to the outside when the query command has arrived at a boundary of the query range. When the query range identifier is the maintenance domain identifier, the boundary point within the query range is particularly a DSAP within the maintenance domain, and the intermediate point is an ISAP; and when the query range identifier includes the maintenance association identifier, the boundary point within the query range is particularly an MEP of the maintenance association, and the intermediate point is an MIP.

Finally, when the node receiving the network topology query command feeds back the network topology information of the local node to the designated node indicated in the query command, it is sufficient for the network topology information of the local node to include information on a connection between the local node and a previous node, and the connection information can be represented by identifiers of two ports interconnected on the two nodes or by respective node identifiers of the two nodes. In addition to this, the network topology information of the local node can include identifiers of part or all of ports on the local node or only those of ports within the query range in the query command, so that the designated node can obtain more port information.

Additionally, it shall be noted that the automatic network topology information discovery mechanism according to the embodiments of the invention can guide a service flow onto another available path through an automatic network topology discovery mechanism upon occurrence of a network fault. This also can function to isolate the fault automatically and will be more efficient as compared with existing manual switching. Furthermore, relatively comprehensive network topology information (including information on a connection between nodes) can be acquired and can reflect from a comparison with the previously present network topology information whether the network logic topology has been changed, so that a network administrator can perform corresponding operations of fault location and isolation, the flow control, and so on, in a timely way, which will be of great value for maintenance of the network.

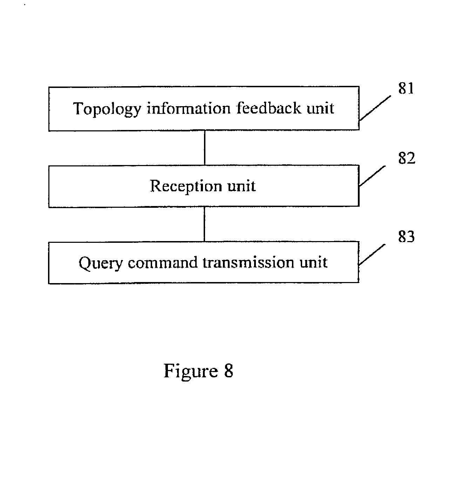

The invention further discloses a fourth embodiment of a node device for making a network topology discovery, and reference is made to Figure 8 which illustrates a schematic structural diagram of the embodiment of the node device, which includes a reception unit 82 and a topology information feedback unit 81, and optionally a query command transmission unit 83, a first determination unit and a second determination unit. The internal structure and connection relationships of the node device will be further introduced below in connection with the operation principle thereof.

The node device receives through the reception unit 82 from a previous node a network topology query command including address information of a designated node. As mentioned previously, the address information of the designated node may be the address of the original node initiating the network topology query command or the address of any other node desiring for the network topology information.

Upon reception of the network topology query command, the reception unit 82 notifies the topology information feedback unit 81, and if there is no other limiting condition, then the topology information feedback unit 81 will feed back to the designated node in the network topology query command the network topology information of the local node, including information on a connection between the local node and the previous node. Specifically, the information on the connection between the local node and the previous node can be identifiers of ports interconnected on the two nodes. Additionally, the network topology information of the local node can further include identifiers of other respective ports on the local node and the identifier of the local node.

If another limiting condition is present, for example, lifetime information (e.g., an instruction lifetime parameter) is further included in the network topology query command, then the node device further correspondingly includes the first determination unit adapted to determine whether the lifetime upon arrival of the network topology query command at the local point is within a preset range after the reception unit 82 receives the network topology query command, and if so, then the first determination unit is adapted to notify the topology information feedback unit 81. Furthermore, the topology information feedback unit 81 feeds back the network topology information of the local node to the designated node on the premise that the determination result of the first determination unit is that the lifetime is within the preset range.

In an another example, a query range identifier is further included in the network topology query command, then the node device further correspondingly includes the second determination unit adapted to determine whether a port on the local node, via which the network topology query command is received, is within the query range, and if so, then the second determination unit is adapted to notify the topology information feedback unit 81. Thus, the topology information feedback unit 81 feeds back the network topology information of the local node to the designated node on the premise that the determination result of the second determination unit is that the port is within the query range. The query range identifier may be a maintenance domain identifier or a maintenance association identifier or a combination thereof, which has been introduced in details above and therefore will not be described here again.

Of course, if both the lifetime information and the query range identifier are included in the network topology query command, then the topology information feedback unit 81 feeds back the network topology information of the local node to the designated node on the premises that the determination result of the first determination unit is that the lifetime is within the preset range and that the determination result of the second determination unit is that the port is within the query range.

Furthermore, the node device can further include the query command transmission unit 83 adapted to transmit to the other nodes the network topology query command including the address information of the designated node. If there is not any limiting condition, then the reception unit 82 of the node device will continue transmission of the network topology query command including the address information of the designated node to the other nodes through the query command transmission unit 83 upon reception of the network topology query command including the address information of the designated node, so that the other nodes each can subsequently continue a feedback of the network topology information of the local node to the designated node. If another limiting condition is present, for example, lifetime information is further included in the network topology query command, then when the determination result of the first determination unit is that the lifetime upon arrival of the network topology query command at the local node is not within the preset range, the topology information feedback unit 81 will not feed back any network topology information of the local node to the designated node, and the query command transmission unit 83 will not continue transmission of the network topology query command including the address information of the designated node to the other nodes. Therefore as for a certain node device, the node device will not continue transmission of the network topology query command including the address information of the designated node to the other nodes through the query command transmission unit 83 if the condition of forwarding the network topology query command is not satisfied.

In another example, if the query range identifier is further included in the network topology query command, then the query command transmission unit 83 will forward the network topology query command including the address information of the designated node to the other nodes via a port on the local node, which is an intermediate point within the query range, thereby limiting the forwarding range of the network topology query command and thereby avoiding transmission of the network topology query command throughout the network, thus improving a utilization ratio of bandwidths. Relevant concepts of the query range, the intermediate point within the query range, and so on, have been detailed above, and repeated descriptions thereof will be omitted here.

It shall be noted that the node device may be a bridge device or another network device. Since the node device can feed back the network topology information of the local node (including information on a connection between the local node and a previous node) to the designated node, the designated node can acquire the network topology information of other nodes, thereby realizing a network topology discovery. Furthermore, if the designated node acquires the network topology information of a plurality of nodes, then the network topology information can be synthesized to form a network topology structure. A query range identifier can be carried in the network topology query command, and the second determination unit in the node device can perform a corresponding process thereof, so that the network topology query range can be reduced to save bandwidth resources.

The method and node device embodiments for making a network topology discovery according to the invention have been detailed above, and the principles and implementations of the embodiments of the invention have been set forth by way of specific examples. The above descriptions of the embodiments are merely intended to facilitate understanding of the invented method and essential idea thereof. Also those ordinarily skilled in the art will modify the embodiments and application scopes thereof in light of the invented idea. Accordingly, the disclosure in the specification shall not be taken for limiting the invention.

## Claims

1. A method for making a network topology discovery,
comprising:
receiving via a first port on a local node from a previous node a network topology query command comprising address information of a designated node;
wherein the network topology query command further comprising a query range identifier, the query range identifier comprising a maintenance domain identifier and/or a maintenance association identifier; and
feeding back (215, 315) on the premise that the first port is within the query range in the network topology query command, to the designated node, network topology information of the local node, comprising information on a connection between the local node and the previous node;
wherein, when the query range identifier comprising a maintenance domain identifier, further comprising if the first port is a Domain Service Access Point, DSAP, the first port will not forward it to any other node; when the query range identifier comprising a maintenance association identifier, further comprising if the first port is a Maintenance Association End Point, MEP, the first port will not forward it to any other node.

2. The method according to claim 1, after receiving the network topology query command from the previous node, further comprising: transmitting (216, 316) the network topology query command comprising the address information of the designated node to nodes other than the local node.

3. The method according to claim 1, wherein the step of receiving the network topology query command from the previous node comprises: receiving, by a plurality of nodes, the network topology query command from the previous node.

4. The method according to claim 1, wherein the network topology query command further comprises lifetime information, and the network topology information of the local node is fed back to the designated node on the premise that the lifetime upon arrival of the network topology query command at the local node is within a preset range; and
if the lifetime upon arrival of the network topology query command at the local node is within the preset range, the method further comprises: transmitting the network topology query command comprising the address information of the designated node to other nodes.

5. The method according to claims 2 or 4, wherein the step of transmitting the network topology query command comprising the address information of the designated node to the other nodes comprises: forwarding the network topology query command comprising the address information of the designated node to the other nodes via a port on the local node, which is a port of an intermediate point within the query range.

6. The method according to claim 5, wherein the query range identifier is a maintenance domain identifier, and wherein the intermediate point within the query range is an intermediate service access point, ISAP;
or
wherein the query range identifier is a maintenance association identifier, and wherein the intermediate point within the query range is a maintenance association intermediate point, MIP.

7. The method according to any one of claims 1 to 3, wherein the information on the connection between the local node and the previous node comprises the identifier of a port on the local node and the identifier of a port of the previous node connected with the local node.

8. A node device for making a network topology discovery,
comprising:
a reception unit (82) adapted to receive via a port on a local node from a previous node a network topology query command comprising address information of a designated node;
wherein the network topology query command further comprising a query range identifier, the query range identifier comprising a maintenance domain identifier and/or a maintenance association identifier; and
a second determination unit and a topology information feedback unit (81):
wherein the second determination unit is adapted to determine whether the port is within the query range, and if the port is within the query range, to notify the topology information feedback unit; and
the topology information feedback unit is adapted to feed back on the premise that the determination result of the second determination unit is that the port is within the query range, to the designated node in the network topology query command, network topology information of the local node, comprising information on a connection between the local node and the previous node;
wherein, when the query range identifier comprising a maintenance domain identifier, the second determination unit further comprising if the port on the local node is a Domain Service Access Point, DSAP, of the maintenance domain, forwarding of the query command via the port will be prohibited; when the query range identifier comprising a maintenance association identifier, the second determination unit further comprising if the port on the local node is a Maintennce Association End Point, MEP, of the maintenance association, forwarding of the query command via the port to the other nodes will be prohibited.

9. The node device according to claim 8, wherein the network topology query command further comprises lifetime information, wherein the node device further comprises:
a first determination unit adapted to determine whether the lifetime upon arrival of the network topology query command at the local node is within a preset range after the reception unit receives the network topology query command, and if the lifetime upon arrival of the network topology query command at the local node is within the preset range, then to notify the topology information feedback unit; and
wherein the network topology information of the local node is fed back to the designated node by the topology information feedback unit on the premise that a determination result of the first determination unit is that the lifetime is within the preset range.

10. The node device according to claim 8 or 9, further comprising:
a query command transmission unit (83) adapted to transmit the network topology query command comprising the address information of the designated node to other nodes.

11. The node device according to claim 10, wherein the network topology query command comprising the address information of the designated node is forwarded by the query command transmission unit to the other nodes via a port on the local node, which is a port of an intermediate point within the query range.

12. The node device according to claim 8, further comprising:
a statistics-making unit adapted to make statistics of the network topology information of the local node after the reception unit receives the network topology query command.

## Patentansprüche

1. Verfahren zum Durchführen einer Netztopologieerkennung,
das Folgendes umfasst:
Empfangen über einen ersten Anschluss auf einem lokalen Knoten von einem vorherigen Knoten eines Netztopologieabfragebefehls, der Adressinformationen eines designierten Knotens umfasst;
wobei der Netztopologieabfragebefehl ferner einen Abfragebereichsbezeichner umfasst,
wobei der Abfragebereichsbezeichner einen Wartungsdomänenbezeichner und/oder einen Wartungszuordungsbezeichner umfasst; und
Rückmelden (215, 315) unter der Voraussetzung, dass sich der erste Anschluss in dem Abfragebereich in dem Netztopologieabfragebefehl befindet, zu dem designierten Knoten von Netztopologieinformationen des lokalen Knotens, die Informationen über eine Verbindung zwischen dem lokalen Knoten und dem vorherigen Knoten umfassen;
wobei es dann, wenn der Abfragebereichsbezeichner einen Wartungsdomänenbezeichner umfasst, ferner umfasst, falls der erste Anschluss ein Domänendienstzugangspunkt (Domain Service Access Point, DSAP) ist, dass der erste Anschluss ihn nicht zu irgend einem anderen Knoten weiterleiten wird; wenn der Abfragebereichsbezeichner einen Wartungszuordnungsbezeichner umfasst, es ferner umfasst, falls der erste Anschluss ein Wartungszuordnungsendpunkt (Maintenance Association End Point, MEP) ist, dass der erste Anschluss ihn nicht zu irgendeinem anderen Knoten weiterleiten wird.

2. Verfahren nach Anspruch 1, das nach dem Empfangen des Netztopologieabfragebefehls von dem vorherigen Knoten ferner Folgendes umfasst: Senden (216, 316) des Netztopologieabfragebefehls, der die Adressinformationen des designierten Knotens umfasst, zu Knoten, die nicht der lokale Knoten sind.

3. Verfahren nach Anspruch 1, wobei der Schritt des Empfangens des Netztopologieabfragebefehls von dem vorherigen Knoten Folgendes umfasst: Empfangen durch mehrere Knoten des Netztopologieabfragebefehls von dem vorherigen Knoten.

4. Verfahren nach Anspruch 1, wobei der Netztopologieabfragebefehl ferner Lebensdauerinformationen umfasst und die Netztopologieinformationen des lokalen Knotens zu dem designierten Knoten unter der Voraussetzung zurückgemeldet werden, dass die Lebensdauer bei der Ankunft des Netztopologieabfragebefehls an dem lokalen Knoten innerhalb eines voreingestellten Bereichs ist; und
das Verfahren, falls die Lebensdauer bei der Ankunft des Netztopologieabfragebefehls an dem lokalen Knoten innerhalb des voreingestellten Bereichs ist, ferner Folgendes umfasst: Senden des Netztopologieabfragebefehls, der die Adressinformationen des designierten Knotens umfasst, zu anderen Knoten.

5. Verfahren nach den Ansprüchen 2 oder 4, wobei der Schritt des Sendens des Netztopologieabfragebefehls, der die Adressinformationen des designierten Knotens umfasst, zu den anderen Knoten Folgendes umfasst: Weiterleiten des Netztopologieabfragebefehls, der die Adressinformationen des designierten Knotens umfasst, zu den anderen Knoten über einen Anschluss auf dem lokalen Knoten, der ein Anschluss eines Zwischenpunkts innerhalb des Abfragebereichs ist.

6. Verfahren nach Anspruch 5, wobei der Abfragebereichsbezeichner ein Wartungsdomänenbezeichner ist und wobei der Zwischenpunkt innerhalb des Abfragebereichs ein Zwischendienstzugangspunkt, ISAP, ist;
oder
wobei der Abfragebereichsbezeichner ein Wartungszuordnungsbezeichner ist und wobei der Zwischenpunkt innerhalb des Abfragebereichs ein Wartungszuordnungszwischenpunkt, MIP, ist.

7. Verfahren nach einem der Ansprüche 1 bis 3, wobei die Informationen über die Verbindung zwischen dem lokalen Knoten und dem vorherigen Knoten den Bezeichner eines Anschlusses auf dem lokalen Knoten und den Bezeichner eines Anschlusses des vorherigen Knotens, der mit dem lokalen Knoten verbunden ist, umfassen.

8. Knotenvorrichtung zum Durchführen einer Netztopologieerkennung,
die Folgendes umfasst
eine Empfangseinheit (82), die ausgelegt ist, über einen Anschluss auf einem lokalen Knoten von einem vorherigen Knoten einen Netztopologieabfragebefehl, der Adressinformationen eines designierten Knotens umfasst, zu empfangen;
wobei der Netztopologieabfragebefehl ferner einen Abfragebereichsbezeichner umfasst, wobei der Abfragebereichsbezeichner einen Wartungsdomänenbezeichner und/oder einen Wartungszuordungsbezeichner umfasst; und
eine zweite Bestimmungseinheit und eine Topologieinformationsrückmeldungseinheit (81):
wobei die zweite Bestimmungseinheit ausgelegt ist zu bestimmen, ob der Anschluss innerhalb des Abfragebereichs ist, und, falls der Anschluss innerhalb des Abfragebereichs ist, die Topologieinformationsrückmeldungseinheit zu benachrichtigen;
und
die Topologieinformationsrückmeldungseinheit ausgelegt ist, unter der Voraussetzung,
dass das Bestimmungsergebnis der zweiten Bestimmungseinheit ist, dass der Anschluss innerhalb des Abfragebereichs ist, zu dem designierten Knoten in dem Netztopologieabfragebefehl Netztopologieinformationen des lokalen Knotens, die Informationen über eine Verbindung zwischen dem lokalen Knoten und dem vorherigen Knoten umfassen, zurückzumelden;
wobei dann, wenn der Abfragebereichsbezeichner einen Wartungsdomänenbezeichner umfasst, die zweite Bestimmungseinheit ferner, falls der Anschluss auf dem lokalen Knoten ein Domänendienstzugangspunkt, DSAP, der Wartungsdomäne ist, umfasst, dass Weiterleiten des Abfragebefehls über den Anschluss verhindert wird; wobei dann, wenn der Abfragebereichsbezeichner einen Wartungszuordnungsbezeichner umfasst, die zweite Bestimmungseinheit ferner, falls der Anschluss auf dem lokalen Knoten ein Wartungszuordnungsendpunkt, MEP, der Wartungszuordnung ist, umfasst, dass Weiterleiten des Abfragebefehls über den Anschluss zu den anderen Knoten verhindert wird.

9. Knotenvorrichtung nach Anspruch 8, wobei der Netztopologieabfragebefehl ferner Lebensdauerinformationen umfasst, wobei die Knotenvorrichtung ferner Folgendes umfasst:
eine erste Bestimmungseinheit, die ausgelegt ist zu bestimmen, ob die Lebensdauer bei der Ankunft des Netztopologieabfragebefehls an dem lokalen Knoten innerhalb eines vorbestimmten Bereichs ist, nachdem die Empfangseinheit den Netztopologieabfragebefehl empfängt, und falls die Lebensdauer bei der Ankunft des Netztopologieabfragebefehls an dem lokalen Knoten innerhalb des voreingestellten Bereichs ist, dann die Topologieinformationsrückmeldungseinheit zu benachrichtigen;
und
wobei die Netztopologieinformationen des lokalen Knotens zu dem designierten Knoten durch die Topologieinformationsrückmeldungseinheit zurückgemeldet werden unter der Voraussetzung, dass ein Bestimmungsergebnis der ersten Bestimmungseinheit ist, dass die Lebensdauer innerhalb des voreingestellten Bereichs ist.

10. Knotenvorrichtung nach Anspruch 8 oder 9, die ferner Folgendes umfasst:
eine Abfragebefehlsendeeinheit (83), die ausgelegt ist, den Netztopologieabfragebefehl, der die Adressinformationen des designierten Knotens umfasst, zu anderen Knoten zu senden.

11. Knotenvorrichtung nach Anspruch 10, wobei der Netztopologieabfragebefehl, der die Adressinformationen des designierten Knotens umfasst, durch die Abfragebefehlsendeeinheit zu den anderen Knoten über einen Anschluss auf dem lokalen Knoten, der ein Anschluss eines Zwischenpunkts innerhalb des Abfragebereichs ist, weitergeleitet wird.

12. Knotenvorrichtung nach Anspruch 8, die ferner Folgendes umfasst:
eine Statistikerstellungseinheit, die ausgelegt ist, Statistik über die Netztopologieinformationen des lokalen Knotens zu erstellen, nachdem die Empfangseinheit den Netztopologieabfragebefehl empfängt.

## Revendications

1. Procédé permettant de faire une découverte de topologie réseau,
comprenant les étapes suivantes :
recevoir par l'intermédiaire d'un premier port sur un noeud local, à partir d'un noeud précédent, une commande de requête de topologie réseau comportant des informations d'adresse d'un noeud désigné ;
la commande de requête de topologie réseau contenant en outre un identifiant de plage de requête, l'identifiant de plage de requête comprenant un identifiant de domaine de maintenance et/ou un identifiant d'association de maintenance ; et
retourner (215, 315) au noeud désigné, si le premier port est compris dans la plage de requête dans la commande de requête de topologie réseau, des informations de topologie réseau du noeud local, comportant des informations concernant une connexion entre le noeud local et le noeud précédent ;
lorsque l'identifiant de plage de requête contient un identifiant de domaine de maintenance, comprenant en outre : si le premier port est un point d'accès de service de domaine, DSAP, le premier port ne le transmettra à aucun autre noeud ; lorsque l'identifiant de plage de requête contient un identifiant d'association de maintenance, comprenant en outre : si le premier port est un point d'extrémité d'association de maintenance, MEP, le premier port ne le transmettra à aucun autre noeud.

2. Procédé selon la revendication 1, comprenant en outre l'étape suivante : après avoir reçu la commande de requête de topologie réseau à partir du noeud précédent, transmettre (216, 316) la commande de requête de topologie réseau comportant les informations d'adresse du noeud désigné aux noeuds autres que le noeud local.

3. Procédé selon la revendication 1, dans lequel l'étape consistant à recevoir la commande de requête de topologie réseau à partir du noeud précédent comprend :
recevoir, par une pluralité de noeuds, la commande de requête de topologie réseau à partir du noeud précédent.

4. Procédé selon la revendication 1, dans lequel la commande de requête de topologie réseau comporte en outre des informations de durée de vie, les informations de topologie réseau du noeud local étant retournées au noeud désigné si la durée de vie à l'arrivée de la commande de requête de topologie réseau, au niveau du noeud local, est comprise à l'intérieur d'une plage prédéfinie ; et
si la durée de vie à l'arrivée de la commande de requête de topologie réseau, au niveau du noeud local, est comprise à l'intérieur de la plage prédéfinie, le procédé comprend en outre : transmettre la commande de requête de topologie réseau comportant les informations d'adresse du noeud désigné aux autres noeuds.

5. Procédé selon les revendications 2 ou 4, dans lequel l'étape consistant à transmettre la commande de requête de topologie réseau comportant les informations d'adresse du noeud désigné aux autres noeuds comprend : transmettre la commande de requête de topologie réseau comportant les informations d'adresse du noeud désigné aux autres noeuds par l'intermédiaire d'un port sur le noeud local, qui est un port d'un point intermédiaire à l'intérieur de la plage de requête.

6. Procédé selon la revendication 5, dans lequel l'identifiant de plage de requête est un identifiant de domaine de maintenance, le point intermédiaire à l'intérieur de la plage de requête étant un point d'accès de service intermédiaire, ISAP ;
ou
l'identifiant de plage de requête étant un identifiant d'association de maintenance, et le point intermédiaire à l'intérieur de la plage de requête étant un point intermédiaire d'association de maintenance, MIP.

7. Procédé selon l'une quelconque des revendications 1 à 3, dans lequel les informations concernant la connexion entre le noeud local et le noeud précédent comportent l'identifiant d'un port sur le noeud local et l'identifiant d'un port du noeud précédent connecté au noeud local.

8. Dispositif noeud permettant de faire une découverte de topologie réseau,
comprenant :
une unité de réception (82) conçue pour recevoir par l'intermédiaire d'un port sur un noeud local, à partir d'un noeud précédent, une commande de requête de topologie réseau comportant des informations d'adresse d'un noeud désigné ;
la commande de requête de topologie réseau contenant en outre un identifiant de plage de requête, l'identifiant de plage de requête comportant un identifiant de domaine de maintenance et/ou un identifiant d'association de maintenance ; et
une deuxième unité de détermination et une unité de renvoi d'informations de topologie (81) :
la deuxième unité de détermination étant conçue pour déterminer si le port est compris à l'intérieur de la plage de requête, et si le port est compris à l'intérieur de la plage de requête, le notifier à l'unité de renvoi d'informations de topologie ; et
l'unité de renvoi d'informations de topologie étant conçue pour retourner au noeud désigné dans la commande de requête de topologie réseau, si le résultat de détermination de la deuxième unité de détermination est que le port est compris à l'intérieur de la plage de requête, des informations de topologie réseau du noeud local, contenant des informations concernant une connexion entre le noeud local et le noeud précédent ; lorsque l'identifiant de plage de requête comporte un identifiant de domaine de maintenance, la deuxième unité de détermination comprenant en outre : si le port sur le noeud local est un point d'accès de service de domaine, DSAP, du domaine de maintenance, la transmission de la commande de requête par l'intermédiaire du port sera interdite ; lorsque l'identifiant de plage de requête comporte un identifiant d'association de maintenance, la deuxième unité de détermination comprenant en outre : si le port sur le noeud local est un point d'extrémité d'association de maintenance, MEP, de l'association de maintenance, la transmission de la commande de requête, par l'intermédiaire du port, aux autres noeuds sera interdite.

9. Dispositif noeud selon la revendication 8, dans lequel la commande de requête de topologie réseau comporte en outre des informations de durée de vie, le dispositif noeud comprenant en outre :
une première unité de détermination conçue pour déterminer si la durée de vie à l'arrivée de la commande de requête de topologie réseau, au niveau du noeud local, est comprise à l'intérieur d'une plage prédéfinie après que l'unité de réception a reçu la commande de requête de topologie réseau, et si la durée de vie à l'arrivée de la commande de requête de topologie réseau, au niveau du noeud local, est comprise à l'intérieur de la plage prédéfinie, le notifier alors à l'unité de renvoi d'informations de topologie ; et
les informations de topologie réseau du noeud local étant retournées au noeud désigné par l'unité de renvoi d'informations de topologie si un résultat de détermination de la première unité de détermination est que la durée de vie est comprise à l'intérieur de la plage prédéfinie.

10. Dispositif noeud selon la revendication 8 ou 9, comprenant en outre :
une unité de transmission de commande de requête (83) conçue pour transmettre la commande de requête de topologie réseau comportant les informations d'adresse du noeud désigné aux autres noeuds.

11. Dispositif noeud selon la revendication 10, dans lequel la commande de requête de topologie réseau comportant les informations d'adresse du noeud désigné est transmise par l'unité de transmission de commande de requête aux autres noeuds par l'intermédiaire d'un port sur le noeud local, qui est un port d'un point intermédiaire à l'intérieur de la plage de requête.

12. Dispositif noeud selon la revendication 8, comprenant en outre :
une unité d'établissement de statistiques conçue pour établir des statistiques sur les informations de topologie réseau du noeud local après que l'unité de réception a reçu la commande de requête de topologie réseau.
